# EUROPEAN PATENT APPLICATION

(11) **EP 4 134 337 A1**
(43) Date of publication of application: **15.02.2023**
(21) Application number: 21190875.1
(22) Date of filing: 11.08.2021
(51) Int. Cl.: B65G 1/137, B65G 47/244

(54) **WAREHOUSE FOR ORDER FULFILMENT AND METHOD OF PICKING**

(71) Applicant: Dematic GmbH, 63150 Heusenstamm (DE)
(72) Inventor: YAMASHITA, Shin, 61440 Oberursel (DE)
(74) Representative: Moser Götze & Partner Patentanwälte mbB

(57) **Abstract**

Warehouse for order fulfilment having at least one Goods-to-Person picking station, each Goods-to-Person picking station having a pick position for presenting a product container including more than one item and a put position for presenting an order container, the proximity of the pick and put positions forming an operator position, wherein the warehouse comprises an identifying device for identifying an item to be picked from a product container and its position within the product container and control means for assigning and routing the product container for order fulfilment to a certain Goods-to-Person picking station within the warehouse, and the product container having a footprint that is larger than an operator pick area being smaller than the footprint and
having an arrangement device for arranging the product container such that the item to be picked from the product container at a certain Goods-to-Person picking station is located substantially within the operator pick area based on the identified position within the product container.

## Description

The invention is directed to having at least one Goods-to-Person picking station, each Goods-to-Person picking station having a pick position for presenting a product container including more than one item and a put position for presenting an order container, the proximity of the pick and put positions forming an operator position according to claim 1 and a corresponding method of claim 18.

Such GTP called picking stations are used for high rate picking by supplying all goods necessary for orders to such stations where the human or robotic picker perform order fulfillment by picking from donor or product containers sourced from storage into order container contains partial or complete orders according to order listings of articles. Usually, the human picker will be guided by some sort of indicator in this process.

This is especially necessary and the case if the donor or product containers are not filled with a single type of article but are mixed ("dirty") containers containing chaotic mixtures of articles. It is also the case, if divider totes with segmented compartments for different articles are used.

This mixture can make it difficult for the human picker to perform a fault-free order and quick fulfilment, as he must use much of his time and concentration to pick the correct article from the mixture to fulfill the order or the operational step presented to him. Also, the picker might be required to pick an item from an area of the product container farther or farthest away from him depending on item location in the product container. This can decrease throughput and worsen ergonomics, due to necessary stretch of arms etc.

DE 10 2015 116 893 A1 discloses an order picking method and an order picking system with a multiple order transport means and a closure arrangement for a multiple order transport means of an order picking system with multiple order picking areas, in which multiple order picking orders can be picked in parallel into different order picking areas of the multiple order transport means, or for a picking station of a picking installation having a plurality of picking areas, in which a plurality of picking orders can be picked in parallel into different picking areas, the closure arrangement comprising a plurality of lids, each of which can be assigned to a picking area, each lid having at least one identification device for determining the opening state of the lid.

In contrast, the object of the present invention is to provide a simpler system in which such errors are at least reduced and preferably done away with but high-rate picking is still possible.

This object is achieved by the warehouse described in claim 1 and the corresponding method of claim 18. Advantageous embodiments are apparent from the subordinate claims and the description.

It has been recognized that if the warehouse comprises an identifying device for identifying an item to be picked from a product container and its position within the product container and control means assigning and routing the product container for order fulfilment to a certain Goods-to-Person picking station within the warehouse and using an arrangement device for changing the arrangement of the product container such that the item to be picked from the product container at the certain Goods-to-Person picking station is located substantially within the operator pick area based on the identified position within the product container, it becomes possible to present the product container and the item to be picked from the presented product container in the most efficient way to the operator, such that the operator need less time to choose the correct item according to the picking list and less errors happen. This saves time and therefore increases throughput and increases ergonomics. The pick and place distance can be minimized by the invention resulting in a performance increase. Additionally, errors by dropping an item in a different location of the product container can be reduced or even eliminated.

The item within the product container will obviously be smaller than the container, otherwise it would not fit. Accordingly, the product container has a footprint that is larger than the item to be picked, which is located in an area within the container that is smaller than the footprint of the container and defines the operator pick area. This in turn means that the operator pick area is smaller than the footprint.

The operator pick area is preferably defined as an optimized area that the picker can ergonomically reach best, which should apply to at least 80% of the human operators according to DIN 33402, preferably at least 90%.

The item to be picked from the product container at the certain Goods-to-Person picking station is located substantially within the operator pick area, meaning that the item is at least mainly located within the operator pick area, i. e. at least 50% of the item is located within. Preferably the complete item will be located within the operator pick area. However, it is evident that depending on the nature (e. g. a lengthy item) of the item it may extend into other areas of the container.

The arrangement device allows for change of arrangement of the product container (or order container, see below). Such arrangement includes positioning and/or reorientation of the respective container relative to the picking position or operator pick area (or respective put position).

Preferably, the arrangement device is a reorientation device for changing the orientation of the product container such that the item to be picked from the product container at the certain Goods-to-Person picking station is located within the operator pick area based on the identified position within the product container, or it is a positioning device for positing of the product container such that the item to be picked from the product container at the certain Goods-to-Person picking station is located within the operator pick area based on the identified position within the product container. It may obviously also comprise both.

Additionally, the warehouse may include more than one picking station, so that the control means may either assign and route the product container for order fulfilment to a Goods-to-Person picking station within the warehouse in which the item to be picked from the product container is located substantially within the operator pick area based on the Goods-to-Person picking station arrangement and the identified position within the product container or to the certain picking station having the reorientation device as set out above.

In other words, based on the identified position of the item to be picked within the product container, the product container is either transported to picking station where the item will be located at the beneficial picking position for an operator due to the arrangement/orientation of such a picking station, or alternatively be transported to a picking station where the product container needs to be "actively" arranged to achieve such a beneficial picking position for an operator.

Therefore, while it is preferred to have at least one picking station with the arrangement (reorientation and/or positioning) device, it is possible that the warehouse includes several picking stations at least some of which have different arrangements of the presentation of the pick and/or put positions for the presentation of the respective containers.

Preferably multiple items are presented to the picker in the product container. Especially, multiple different items are present in the product container. In other words, it is a mixed stock-keeping-unit (sku) type container.

The identifying device for identifying an item to be picked from a product container and its position within the product container is either located in the route to a certain Goods-to-Person picking station or at the picking station itself.

The reorientation device for changing the orientation of the presented product container is either located in the route to a certain Goods-to-Person picking station or in the picking station itself.

The reorientation device for changing the orientation of the presented product container may comprise a rotation system for rotation of the product container relative to its center. In other words, the product container is horizontally rotated while its bottom stays on the support. Such a rotation system may comprise a rotor, a rotator, a ball roller conveyor, a turn table, a rotational disk, a robotic arm with gripper, a roller surface with retractable pin, omni wheels etc. on which the container can be rotated on the spot or within a short distance, e. g. by interacting with the bottom surface and turning it.

The rotation system will then be controlled to perform a rotation of the product container during reorientation to change the location of the item to be picked relative to the operator location for allowing easy access and less fatigue due to improved ergonomics as well as higher pick/put rate.

The rotation may be performed for example by 0, 90, 180 or 270° degrees, if the container is segmented into quadrants. The container may be segmented in different ways, e. g. two segments or more than four segments or circular segments etc. In any case, the orientation of container is performed such that the product to be picked is located substantially within the operator pick area after the reorientation.

Alternatively or additionally, the arrangement of the product container can include a variable positioning depending on the item location in the product container and/or put location by positioning the respective container such that the item is in the operator pick area. This can be achieved by controlling for example the conveyor on which the respective container is conveyed such that the container's position is based on the item to be picked substantially being in the operator pick area. In other words, this can include either overshooting or undershooting the product and/or order container in relation to the middle of the usual pick position.

Preferably, the identifying device for identifying the item to be picked from the presented product container comprises an image recognition system including a picture grabbing (e. g. an imager, camera, video cam) and evaluation system (a processor, computer, programmable logic controller) for capturing and evaluating a picture of the items in the presented product container. In this manner an image of the container contents can be taken and computationally evaluated to identify the item to be picked according to the order listing and its known characteristics and also to identify its location within the container.

In a possible version the container is virtually or physically segmented into quadrants which helps to identify the location of the item to be picked. The containers may have a rectangular or square footprint.

The warehouse or Goods-to-Person picking station according to the invention may comprise a control (processor, computer, programmable logic controller) to evaluate signals from the identifying device and for controlling the reorientation device, especially to achieve the rotation of the product container as needed, e. g. by 0, 90, 180 or 270° degrees for reorientation. The Goods-to-Person picking station according to the invention may also be a robotic station, in which a manual operator's function is supplemented or replaced by a robotic arm with corresponding gripping means and control means.

After reorientation and/or positioning the item to pe picked is preferably located in the segment or quadrant of the presented product container within the operator pick area, preferably this should be closest to the operator's operation position (e. g. an intersection/angle formed the pick position for presenting a product container including multiple items and the put position for presenting an order container). This reduces his efforts.

The picking station may include a cover operable to leave the space above the position of the item to be picked accessible and to cover the remaining space. In other words, only the item to pe picked from the nearest quadrant will be left accessible, all others will be covered. This further reduces errors.

If the cover is opaque the operator will not be distracted. On the other hand, if the cover is transparent the operator is able to take note of possible errors made by the identifying device and override the system.

As described above for product containers, the same may be provided for the order containers. These may also be reoriented and/or routed to the pick station with preferred orientation and/or position.

According to the method of the invention the location of the identifying and arrangement (especially the reorientation) device is not bound to the picking station, but the invention can also be performed if the identifying device and the reorientation device for changing the orientation of the presented container are located outside of the picking station. Such a location could be in the conveyor system supplying the picking station or even in a material flow sense at an earlier stage within the warehouse in which the picking station is located.

Accordingly, core of the invention is to provide a container such that the product to be picked is located within the operator pick area in an ergonomic fashion, which is achieved either by reorientation and/or positioning of the container or by choice of picking station arrangement/orientation that inherently provides such an orientation (without need for reorientation).

Further features and details of the invention will be apparent from the description hereinafter of the drawing, in which
Fig. 1 shows a schematic top view of a warehouse order fulfilment area with picking stations;
Fig. 2 shows a corresponding top view including a station according to the invention with a reorientation of a product container;
Fig. 3 shows a top view including a further embodiment of a station according to the invention with an additional reorientation of an order container and
Fig. 4 shows a schematic top view on a conveyor system in a further embodiment having two picking stations with differing arrangement for container presentation as well as
Fig.5 shows a top view including on a further embodiment of a station according to the invention with a variable positioning of the product and order container.

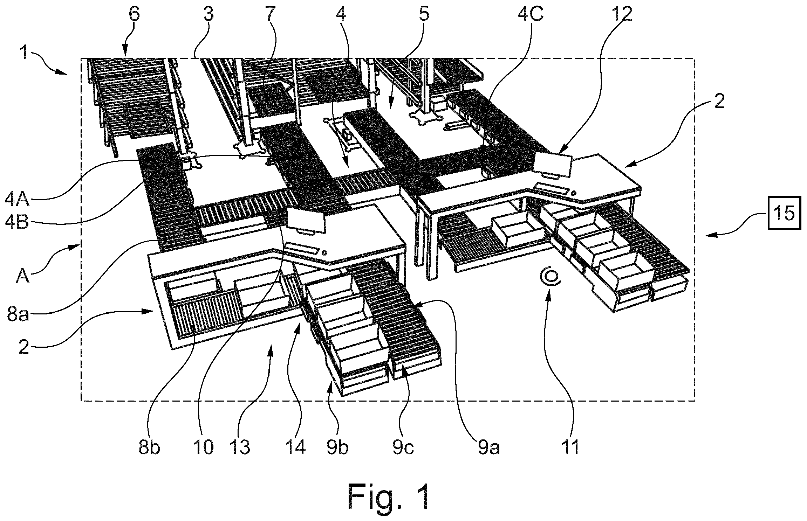

In figure 1 a schematic perspective view of a picking area 1 in a warehouse with two picking stations 2 that are connected to a racking 3 by conveyors 4 in an order fulfillment level A is shown. Each picking station 2 corresponds to an aisle 5 of the racking 3 with the racks 6 neighboring the aisle 5 in between and is connected to a load carrier vertical conveyor 7 (e. g. a lift or an elevator) arranged within the footprint of each rack 6 at its front end via the conveyors 4. The racks are serviced by ASRS machines (not shown), e. g. shuttles, that drop off loads to the vertical conveyors 7.

Conveyor 4C is a connecting conveyor system in the form of a cross aisle conveyor running the length of the front of the racking 3 across all aisles 5 and possibly on to a not shown packaging area.

The conveyors 4A, B bridge the racking 3 and the picking stations 2, connecting to an inbound product load carrier conveyor 8a, b and an inbound order load carrier conveyor 9a, b and a common take away discharge conveyor 10. The load carriers themselves can for example be standard containers or trays.

Inbound product load carrier conveyor 8 has a first conveying section 8a leading into the station in extension of the (longitudinal or down) aisle direction and a second conveying section 8b oriented 90° degrees thereto forming the actual conveying system within the station for presentation of the load carriers with products to pick from to the operator 11.

Inbound order load carrier conveyor 9 has a first inbound conveying section 9a leading into the station in extension of the (longitudinal or down) aisle direction and a second conveying section 9b which is arranged in parallel thereto connected by a right-angle-transfer (RAT) 9c.

Product load carrier conveyor section 8b and load carrier conveyor section 9b intersect each other and are forming an operating position 13 for the operator and intersection 14. The intersection can be formed in a wide range of angles, but usually will be in the range between 60 and 120 degrees, preferably 90 degrees.

A common take away discharge conveyor 10 is arranged in direct extension of the order load carrier conveyor section 9b and starts at the intersection 14 with product load carrier conveyor section 8b.

Each picking station 2 may include a display and controls 12 for information of and control by the operator 11 to perform picking from donor or product containers D sourced from storage into order container O according to an order listing. The operator may also be guided by other means, like pick-by-light, pick-by-voice and extended/augmented reality etc. The picking station may also not have any such means and picking may be performed based on "paper".

Product load carrier conveyor section 8b as a whole may be tilted towards the operating position 13.

Another optimization in relation to presentation may be to tilt the pick and/or put position. Tilting of the donor position is done by means of tilting conveyor 8b itself allowing the product load carrier to be tilted when it is transferred from conveyor 8a to conveyor 8b. Tilting of order positions can be done by means of an active tilting mechanism e. g. a tilted RAT (Right Angle Transfer) and only corresponding put position maybe tilted (adaptive tilting) then by providing the operator with a distinct indication where the picked items are to be put to.

The conveyors are controlled by controller 15 to provide a simultaneous and continuous conveyance flow of product and order carriers through the picking station 2 on the respective conveyors 8, 9 and 10 in accordance with the needs for order fulfilment, which in turn is managed by an overall warehouse management system (WMS) interacting and interfaced with an order tracking system. Obviously also the controller is used to control overall material flow within the racking 3 and 5 and from there to the picking stations 2.

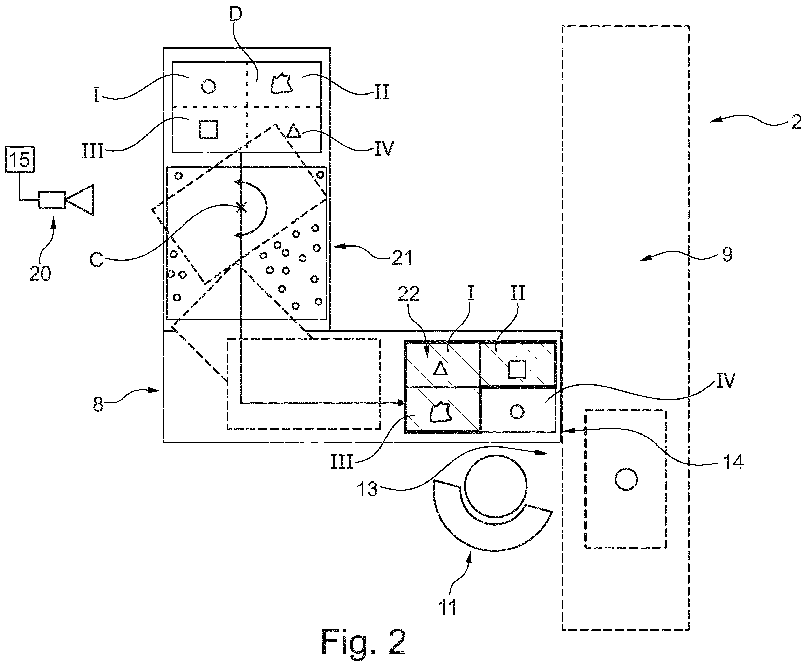

Figure 2 schematically shows a picking station 2 incorporating a reorientation of a product or donor tote D for optimized picking into an order tote O by the operator 11 at operating position 13 at intersection 14.

The picking station 2 includes an imager 20 interfaced to control 15 for identifying the item to be picked from the presented product container D for capturing and evaluating a picture of the items in the presented product container D. In this manner an image of the container contents can be taken and computationally evaluated to identify the item to be picked according to the order listing and its known characteristics and also to identify its location within the container.

The product container D of the example is virtually segmented into quadrants I, II, III, IV which helps to identify the location of the item to be picked.

In the example the operator needs to pick the item symbolized by a circle next. The computation evaluation in control 15 results in identifying and positioning item "circle" is in the quadrant I in the orientation of the donor tote D on the inbound product load carrier conveyor 8.

However, for the operator 11 to conveniently pick at the operating position 13 at intersection 14, the item (circle) needs to be located at quadrant IV.

To achieve this, the picking station includes a rotation system 21, controlled by control 15 based on the signals or information from imager 20 and computational evaluation.

The rotation system 21 in the example is a ball conveyor allowing rotation of donor tote D around its center C as indicated.

In the present case, the rectangular donor tote D is rotated by 180° degrees, so that now the item "circle" is located in quadrant IV when arriving at the pick position at intersection 14.

The picking station 2 also includes a transparent cover 22 (hashed area), that covers all three quadrants I, II, III but leaves quadrant IV open and accessible.

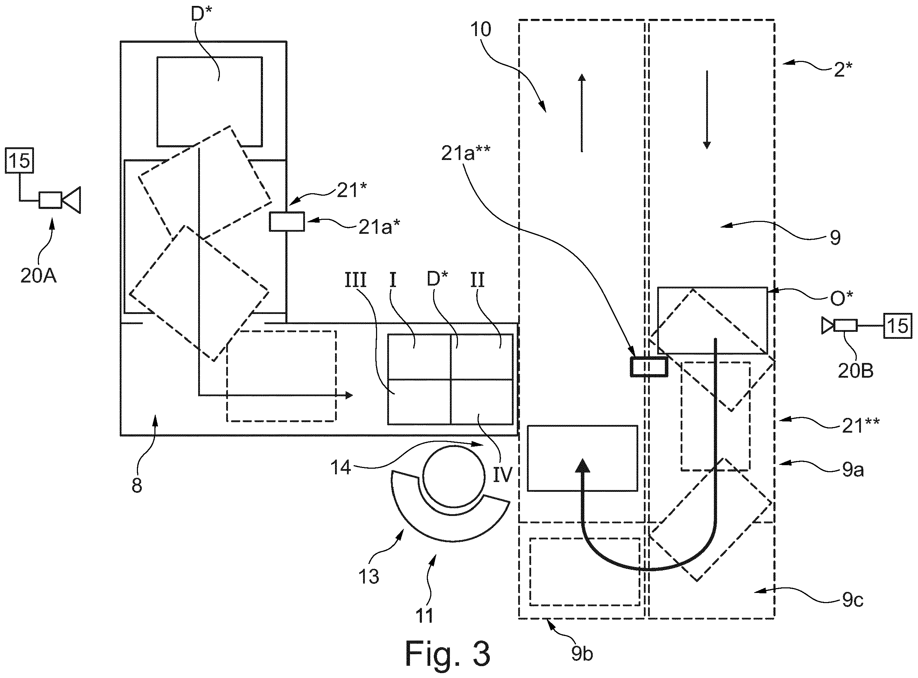

The picking station 2* of figure 3 is essentially the same as the one just described in relation to figure 2 and therefore only differences will be highlighted below. Same features will be designated with same reference number.

The picking station 2* of figure 3 differs in a first aspect, namely the use of product containers D* having a square footprint, meaning that these can be more easily rotated by 90, 180 or 270° degrees, if needs to be reoriented, as the container is segmented into quadrants.

Additionally, the rotation system 21* uses a roller surface with retractable pin 21a*, which is used to contact the corner edge of a container D* to perform rotation as necessary. To achieve this, the rotation system 21* is controlled by control 15 based on the signals or information from imager 20A and computational evaluation.

In the same way, also the order containers O* can be reoriented by rotation system 21** also using a roller surface with retractable pin 21a** in inbound order load carrier conveyor 9 in first inbound conveying section 9a leading into the station in extension (see above in relation to figure 1). This allows the system to reorientate the order container such that for example the free space for putting the next item is ergonomically oriented closest to the operator 11 within the most ergonomic operator pick area.

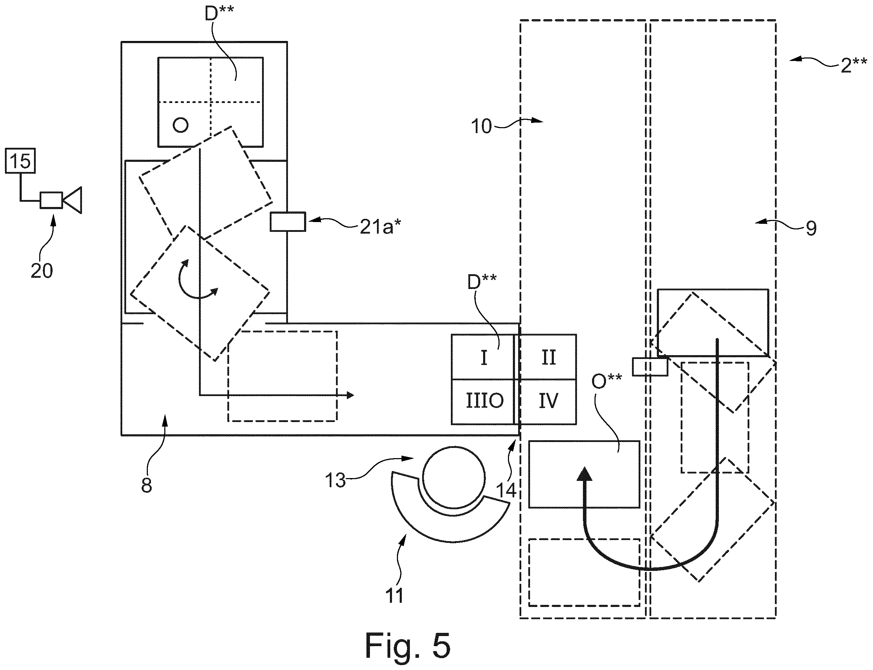

The picking station 2** of figure 5 is essentially the same as the one described in relation to figure 3 and therefore only differences will be highlighted below. Same features will be designated with same reference number.

The main difference is that in the example the operator needs to pick the item symbolized by a circle next, which is located in quadrant III. The computation evaluation in control 15 that results in identifying and positioning item "circle" is in the quadrant III in the orientation of the donor tote D** on the inbound product load carrier conveyor 8.

Therefore, a reorientation of the product container is not necessary and a positioning controlled by control 15 to position container D** such that the item "circle" is located within the operator pick area closest to the operator is sufficient.

As such, control 15 controls conveyor 8 such that the container D** is positioned with quadrant III at the operator pick area, i. e. almost at the intersection 14.

In this manner the product container D** extends slightly into the discharge conveyor 10.

Therefore, conveyor 9 is controlled such that order container O** is positioned before the intersection 14 so as not to interfere.

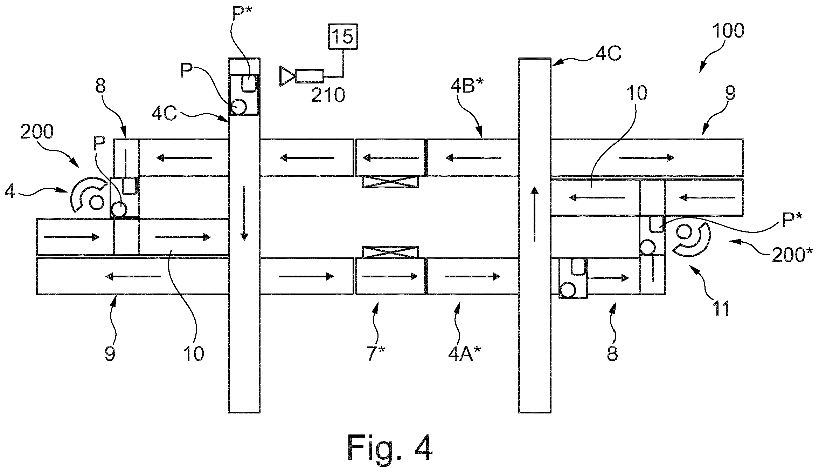

According to a different embodiment of the invention shown in figure 4, the picking area 100 of a warehouse comprises an identifying device 210 for identifying an item to be picked from a product container D and its position within the product container D that is located outside of the picking station, namely on the routing conveyors 4C.

This feeds into control 15 for either assigning and routing the product container for order fulfilment to a certain Goods-to-Person picking station 200 or 200* within the warehouse in which the item to be picked from the product container is located within the most ergonomic operator pick area closest to the operator position 14 based on the Goods-to-Person picking station arrangement and the identified position of the item within the product container D.

For example, if the next item to be picked is the item denoted as a circle, then the circle is identified as already being located or positioned within the product container D such that it will "automatically" be positioned within the most ergonomic operator pick area closest to the operator 11 if the product container D is assigned and routed to picking station 200. Therefore, there is no need for a reorientation or rotation.

If it were assigned and routed to picking station 200*, then the circle would be located in a position not within the most ergonomic operator pick area closest to the operator and then a reorientation or rotation becomes necessary.

On the other hand, if the next item to be picked is the other item denoted as a rectangle, then the rectangle is identified as already being located or positioned within the product container D such that it will "automatically" be positioned within the most ergonomic operator pick area closest to the operator 11 if the product container D is assigned and routed to picking station 200*. Therefore, there is no need for a reorientation or rotation.

In contrast, if it were assigned and routed to picking station 200, then the rectangle would be located in a position not within the most ergonomic operator pick area closest to the operator and then a reorientation or rotation becomes necessary.

In this way, the reorientation of the containers can be either reduced or even eliminated. Obviously, the method or assigning and routing to a picking station based on identified location of an item in the respective container can be combined in several ways with the function of arrangement (reorientation and/or positioning) to achieve the best ergonomic solution while minimizing the use of routing resource e. g. conveyor and delay ensuring maximum throughput.

## Claims

1. Warehouse for order fulfilment having at least one Goods-to-Person picking station, each Goods-to-Person picking station having a pick position for presenting a product container including more than one item and a put position for presenting an order container, the proximity of the pick and put positions forming an operator position, wherein the warehouse comprises an identifying device for identifying an item to be picked from a product container and its position within the product container and control means for assigning and routing the product container for order fulfilment to a certain Goods-to-Person picking station within the warehouse, and
the product container having a footprint that is larger than an operator pick area being smaller than the footprint and
having an arrangement device for arranging the product container such that the item to be picked from the product container at the certain Goods-to-Person picking station is located substantially within the operator pick area based on the identified position within the product container.

2. Warehouse according to claim 1, wherein the arrangement device is a reorientation device for changing the orientation of the product container such that the item to be picked from the product container at the certain Goods-to-Person picking station is located within the operator pick area based on the identified position within the product container, and/or
is a positioning device for positing of the product container such that the item to be picked from the product container at the certain Goods-to-Person picking station is located within the operator pick area based on the identified position within the product container.

3. Warehouse according to claim 1 or 2, for order fulfilment having at least two Goods-to-Person picking stations and the control means for
either assigning and routing the product container for order fulfilment to a Goods-to-Person picking station within the warehouse in which the item to be picked from the product container is located within the operator pick area based on the Goods-to-Person picking station arrangement and the identified position within the product container,
or assigning and routing the product container for order fulfilment to the certain Goods-to-Person picking.

4. Warehouse according to any preceding claim, **characterized in that** the identifying device for identifying an item to be picked from a product container and its position within the product container is located in the route to a certain Goods-to-Person picking station.

5. Warehouse according to any preceding claim 1 to 3, **characterized in that** the picking station itself comprises an identifying device for identifying an item to be picked from the presented product container and its position within the presented product container.

6. Warehouse according to any preceding claim, **characterized in that** the reorientation device for changing the orientation of the presented product container is located in the route to a Goods-to-Person picking station.

7. Warehouse according to any preceding claim 1 to 5, **characterized in that** the picking station itself comprises the reorientation device for changing the orientation of the presented product container.

8. Warehouse according to claim 6 or 7, **characterized in that** the reorientation device for changing the orientation of the container comprises a rotation system for rotation of the product container relative to its center.

9. Warehouse according to any preceding claim, **characterized in that** the positioning device is a conveyor forming the pick position for presenting a product container and the conveyor is controlled by a control for positioning of the product container such that the item to be picked from the product container at the certain Goods-to-Person picking station is located substantially within the operator pick area based on the identified position within the product container.

10. Warehouse according to any preceding claim, **characterized in that** the identifying device for identifying the item to be picked from the product container comprises an image recognition system including a picture grabbing and evaluation system for capturing a picture of the items in the product container.

11. Warehouse according to any preceding claim, comprising a control to evaluate signals from the identifying device and for controlling the arrangement device.

12. Warehouse according to any preceding claim, **characterized in that** the rotation system performs a rotation of the container of 0, 90, 180 or 270° degrees.

13. Warehouse according to any preceding claim, **characterized in that** the item to be picked is located in the quadrant of the product container within the operator pick area, preferably at an intersection/ angle formed by the pick position for presenting a product container including multiple items and the put position for presenting an order container.

14. Warehouse according to any preceding claim, **characterized in that** the picking station includes a cover operable to leave the space above the position of the item to be picked accessible and to cover the remaining space.

15. Warehouse according to claim 14, **characterized in that** the cover is opaque or transparent.

16. Warehouse according to any preceding claim, **characterized by** control means for assigning and routing the order container for order fulfilment to a certain Goods-to-Person picking station within the warehouse and using an arrangement device for arranging of the order container such that the item to be put to the order container at a certain Goods-to-Person picking station is located substantially within the operator pick area based on the identified put position within the order container.

17. Warehouse according to any preceding claim, **characterized by** having at least two Goods-to-Person picking stations and the control means for either assigning and routing the order container for order fulfilment to a Goods-to-Person picking station within the warehouse in which the item to be put to the order container is located substantially within the operator pick area based on the Goods-to-Person picking station arrangement and the identified put position within the order container,
or assigning and routing the order container for order fulfilment to the certain Goods-to-Person picking.

18. Method of order fulfilment in a Warehouse having at least one Goods-to-Person picking station, including the steps of
presenting a product container at a pick position in a certain Goods-to-Person picking station and
presenting an order container at a put position in the certain Goods-to-Person picking station,
forming an operator position at the proximity of the pick and put positions in the certain Goods-to-Person picking station,
in the warehouse, identifying an item to be picked from a product container and its position within the product container;
deciding to assign and route the product container for order fulfilment to a certain Goods-to-Person picking station within the warehouse and using an arrangement device for changing the arrangement of the product container such that the item to be picked from the product container at the certain Goods-to-Person picking station is located substantially within an operator pick area based on the identified position within the product container.

19. Method of order fulfilment according to claim 18, **characterized by** deciding to either assign and route the product container for order fulfilment to a Goods-to-Person picking station within the warehouse in which the item to be picked from the product container is located substantially within the operator pick area based on the Goods-to-Person picking station arrangement and the identified position within the product container,
or deciding to assign and route the product container for order fulfilment to the certain Goods-to-Person picking station.

20. Method of order fulfilment according to claim 18 or 19, **characterized by** either assigning and routing the order container for order fulfilment to a certain Goods-to-Person picking station within the warehouse and using an arrangement device for changing the arrangement of the order container such that the item to be put to the order container at a certain Goods-to-Person picking station is located substantially within the operator pick position based on the identified put position within the order container or
by having at least two Goods-to-Person picking stations and the control means for either assigning and routing the order container for order fulfilment to a Goods-to-Person picking station within the warehouse in which the item to be put to the order container is located substantially within the operator pick area based on the Goods-to-Person picking station arrangement and the identified put position within the order container,
or assigning and routing the order container for order fulfilment to the certain Goods-to-Person picking.
